(19) Europäisches Patentamt
European Patent Office
Office européen des brevets

(11) Publication number: 0 239 135
B1

(12) # EUROPEAN PATENT SPECIFICATION

(45) Date of publication of the patent specification: 07.11.90

(51) Int. Cl.$^5$: C08K 3/32, C08L 71/12

(21) Application number: 87200127.6

(22) Date of filing: 28.01.87

(54) **Polymer mixture with polyphenylene ether and stabiliser.**

(30) Priority: 24.03.86 NL 8600742

(43) Date of publication of application: 30.09.87 Bulletin 87/40

(45) Publication of the grant of the patent: 07.11.90 Bulletin 90/45

(84) Designated Contracting States: DE FR GB IT NL

(56) References cited:
EP-A- 0 078 238
US-A- 4 255 321

(73) Proprietor: GENERAL ELECTRIC COMPANY, 1 River Road, Schenectady New York 12305(US)

(72) Inventor: Lohmeijer, Johannes Hubertus G. M., General Eletric Plastics B.V. P.O. Box 117, NL-4600 AC Bergen op Zoom(NL)

(74) Representative: Schüler, Horst, Dr. et al, Kaiserstrasse 69, D-6000 Frankfurt/Main 1(DE)

EP 0 239 135 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a polymer mixture which comprises a polyphenylene ether, optionally a vinylaromatic polymer and a stabiliser.

Polymer mixtures which comprise a polyphenylene ether, a vinylaromatic compound, for example, a high-impact polystyrene, and a stabiliser, are known for example, from US-A-4,255,321. The known stabiliser is an inorganic metal sulphide, for example, zinc sulphide, combined with a zinc oxide. As a stabiliser may furthermore be used an organic phosphite compound.

The requirement imposed on stabilisers for polymer mixtures which comprise a polyphenylene ether is that they should be operative in small concentrations and that at the temperatures at which the polymer mixtures are processed, they are not volatile, do not cause softening, are not poisonous, do not cause non-uniform discolouring, can easily be handled, and are not too expensive.

The polymer mixture according to the invention comprises a new stabiliser. The polymer mixture according to the invention has the advantage that it is not plasticised by the new stabiliser, is not poisonous, since the new stabiliser has "FDA-approval". In contrast with the generally used organic phosphite compounds, the new stabiliser is a solid so that it can more easily be handled. Moreover, the new stabiliser shows an approximately equal stabilising effect while smaller quantities by weight are used.

The polymer mixture according to the invention has the characteristic that it comprises as a stabiliser an inorganic hydrogen phosphate or phosphoric acid in a quantity from 0.01 to 3.0 parts by weight per 100 parts by weight of polyphenylene ether.

The polymer mixture according to the invention may moreover comprise a mixture of zinc oxide and zinc sulphide in a quantity from 0.01 to 3.0 parts by weight per 100 parts by weight of polyphenylene ether.

The polymer mixture according to the invention preferably comprises as an inorganic hydrogen phosphate a hydrogen phosphate of an alkali metal or an alkaline earth metal, for example, monosodiumdihydrogen phosphate.

In addition to the compounds mentioned hereinbefore, the polymer mixture according to the invention may comprise one or more of the conventional additives.

The polymer mixture according to the invention comprises at any rate one or more of the following constituents
:

A. polyphenylene ethers and
B. inorganic hydrogen phosphates.

EP-A-0078238 discloses thermoplastic compositions to which a calcium phosphate has been added to increase the arc resistance and to decrease the corro sive action of compositions comprising a flame retardant also upon contact with metals. One of the calcium phosphates that can be used is calcium hydrogen phosphate. It is claimed that the calcium addition is effective for 16 different classes of polymers. One of the mentioned classes deals with polyphenylene ethers. The described invention has been exemplified with polybutylene terephtalate only. The calcium phosphate is added in a quantity of 0.01-40% by weight (in the examples 5-20% by weight) in order to increase the arc resistance; it is added in a quantity of 0.01-4% by weight (in the examples 0.3-2.0% by weight) to decrease the corrosive action of thermoplastics. The only example dealing with calcium hydrogen phosphate deals with an addition of 20% by weight.

The present invention deals with the stabilisation of polymer mixtures comprising a polyphenylene ether.

The polymer mixture according to the invention may moreover comprise one or more constituents selected from the following groups:

C. vinylaromatic compounds and/or
D. zinc oxide and zinc sulphide and/or
E. conventional additives.

A. Polyphenylene ethers

Polyphenylene ethers (also known as polyphenylene oxides ) as used in the invention are a group of polymers which are known per se. They are used in industry on a wide scale, in particular as technical synthetic resins in applications where ductility and thermal resistance are required. Since their discovery, numerous variations and modifications have been found all of which are suitable for use in the present invention, including, but not restricted to, those described hereinafter.

Polyphenylene ethers comprise a number of units of the formula:

(1) 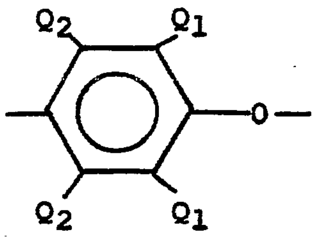

In each of these units, independently of each other, each $Q_1$ is a halogen, a primary or secondary lower alkyl (i.e. alkyl having not more than seven carbon atoms), phenyl, haloalkyl, amino alkyl, hydrocarbonoxy or halohydrocarbonoxy in which at least two carbon atoms separate the halogen and oxygen atoms; and each $Q_2$ is independent hydrogen, halogen, primary or secondary lower alkyl, phenyl, haloalkyl, hydrocarbonoxy or halohydrocarbonoxy as indicated for $Q_1$. Examples of suitable primary lower alkyl groups are methyl, ethyl, n-propyl, n-butyl, isobutyl, n-amyl, isoamyl, 2-methyl-butyl, n-hexyl, 2,3-dimethyl-butyl, 2-, 3- or 4-methylpentyl and the corresponding heptyl groups. Examples of secondary lower alkyl groups are isopropyl, sec-butyl and 3-pentyl. Preferably, alkyl radicals, if any, are straight instead of branched. Each $Q_1$ is often an alkyl or phenyl, in particular a $C_{1-4}$ alkyl and each $Q_2$ is a hydrogen. Suitable polyphenylene ethers are described in a large number of patents.

Both homopolymeric and copolymeric polyphenylene ethers are suitable. Examples of suitable homopolymers are those with 2,6-dimethyl-1,4-phenylene ether units. Suitable copolymers include random copolymers which comprise such units in combination with (for example) 2,3,6-trimethyl-1,4-phenylene ether units. Many suitable random copolymers and homopolymers are described in the patent literature. Also suitable are polyphenylene ethers which comprise units which change the properties such as a molecular weight, the melt viscosity and/or the impact strength. Such polymers are described in the patent literature and may be prepared by grafting vinyl monomers, for example, acrylonitrile and vinylaromatic compounds (for example, styrene) or polymers such as polystyrenes and elastomers in known manner on the polyphenylene ether. The product usually comprises both grafted and non grafted units. Further suitable polymers are the coupled polyphenylene ethers in which the coupling agent is reacted in known manner with the hydroxy groups to two polyphenylene ether chains while forming a polymer of higher molecular weight which comprises the reaction product of the hydroxy groups and the coupling agent. Examples of suitable coupling agents are polycarbonates with low molecular weight, quinone compounds, heterocyclic compounds and formal compounds.

Polyphenylene ethers usually have a number-averaged molecular weight between approximately 3,000 and 40,000 and a weight-averaged molecular weight between approximately 20,000 and 60,000, as determined by means of gel permeation chromatography. In most of the cases the intrinsic viscosity is between approximately 0.35 and 0.7 dl/g measured in chloroform at 25° C.

Polyphenylene ethers are usually prepared by the oxidative coupling of at least one corresponding hydroxyaromatic compound. Particularly suitable and easily obtainable hydroxyaromatic compounds are 2,6-xylenol (in wich each $Q_1$ is a methyl and each $Q_2$ a hydrogen), in which the resulting polymer may be indicated as a poly(2,6-dimethyl-1,4-phenylene ether) and 2,3,6-trimethylphenol (in which each $Q_1$ and one $Q_2$ is methyl and the other $Q_2$ is hydrogen).

A number of catalyst systems are known for the preparation of polyphenylene ethers by oxidative coupling. There are no restrictions as regards the choice of the catalyst and any known catalyst may be used. They usually comprise at least a heavy metal compound such as a copper, manganese or cobalt compound, usually in combination with various other materials.

A first group of catalyst systems preferably to be used consists of those which comprise a copper compound. Such catalysts are described, for example, in US-A-3,306,874; 3,306,875; 3,914,266 and 4,028,341. They usually consist of combinations of monovalent and bivalent copper ions, halogen (i.e. chloride and bromide) ions and at least one amine.

Catalyst systems which comprise manganese compounds form a second group which is preferably to be used. They usually consist of alkaline systems in which bivalent manganese has been combined with anions such as halide, alkoxide or phenoxide. The manganese is in most of the cases present in the form of a complex with one or more complex-forming agents and/or chelating agents, such as dialkylamines, alkanolamines, alkylene diamines, o-hydroxyaromatic aldehydes, o-hydroxyazo compounds, alpha-hydroxyamines (monomeric and polymeric), o-hydroxyaryloximes and beta-diketones. Also suitable are the known cobalt-containing catalyst systems. Suitable manganese and cobalt-containing catalyst systems for the preparation of polyphenylene ethers are known by their description in numerous patents and publications.

The polyphenylene ethers usually comprise terminal groups which depend on the catalyst systems used and the reaction conditions used.

B. Inorganic hydrogen phosphates

The polymer mixture according to the invention comprises one or more inorganic hydrogen phosphates in a quantity from 0.01 to 3.0 parts by weight per 100 parts by weight of polyphenylene ether. When quantities of less than 0.01 parts by weight are used, no noticeable stabilisation occurs. Using more than 3.0 parts by weight does not result in a further improvement of the stabilisation.

Examples of suitable inorganic hydrogen phosphates are monosodium dihydrogen phosphates, disodium monohydrogen phosphate, ammonium mono- or dihydrogen phosphate, potassium mono- or dihydrogen phosphate, phosphoric acid. Hydrogen phosphates such as disodium diphosphate are also suitable.

C. Vinylaromatic compounds

The polymer mixture according to the invention may comprise one or more vinylaromatic polymers. Preferably used vinylaromatic polymers are polymers which are built up for at least 25% by weight of recurring units derived from a vinylaromatic compound of the formula:

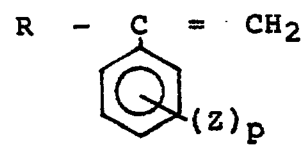

wherein R is a hydrogen atom; a lower alkyl or halogen; Z is a vinyl, halogen or lower alkyl; and p = 0 or an integer of at most 5. As lower alkyl groups are meant alkyl groups having 1-7 carbon atoms.

Examples of the above-meant polymers are the homopolymers such as homopolystyrene, poly-alphamethyl styrene and monochloropolystyrene, modified polystyrenes, such as rubber-modified high-impact polystyrenes, i.e. polystyrene which is mixed with or grafted with natural or synthetic elastomers, such as polybutadiene, styrene-butadiene, EPDM rubbers, acrylate rubbers and the like. Further examples are styrene-containing copolymers such as styrene-acrylonitrile copolymers, styrene-butadiene copolymers, styrene-acrylonitrile-alpha-alkylstyrene terpolymers, styrene-acrylonitrile-butadiene copolymers, copolymers of ethylvinylbenzene, divinylbenzene and styrene-maleic acid anhydride copolymers. Furthermore may be mentioned block copolymers of styrene-butadiene or stryrene-butadiene-styrene. These blocks copolymers may be partially hydrogenated.

The quantity of vinylaromatic compounds to be used may vary between wide limits. In general, this quantity is between 0 and 900 parts by weight per 100 parts by weight of polyphenylene ether.

D. Zinc oxide and zinc sulphide

The polymer mixture according to the invention may comprise, in combination with the inorganic phosphate, zinc oxide and zinc sulphide in a quantity from 0.01 to 3.0 parts by weight per 100 parts by weight of polyphenylene ether.

E. Usual additives for polymer mixtures which comprise a polyphenylene ether

In addition to the above-mentioned constituents, the polymer mixture according to the invention may comprise one or more of the additives conventionally used for polymer mixtures which comprise a polyphenylene ether. By way of example may be mentioned flame-retardants, such as aromatic phosphates and halogen compounds, UV-stabilisers, a small quantity of polyolefines such as polyethylene, dyes and pigments, agents to improve the sensitivity to crack formation upon contact with organic solvents, for example, organic sulphonates, blowing agents, lubricants, mould-release agents, reinforcing or non-reinforcing fillers, impact strength-improving agents.

The polymer mixture according to the invention can be prepared according to any conventional method of preparing polymer mixtures. It is usually prepared by the collective extrusion of the desired constituents in an extruder.

The invention will now be described in greater detail with reference to the ensuing specific example.

Example I and comparative examples A and B.

Three polymer mixtures were prepared consisting of 50 parts by weight of poly(2,6-dimethyl-1,4-phenylene)ether having an intrinsic viscosity of 0,48 dl/g at 25°C in chloroform, 50 parts by weight of high-impact polystyrene having a polybutadiene content of 9.5% by weight, 1,5 parts by weight of polyethylene and 2,0 parts by weight of titanium dioxide (comparative example A). The polymer mixture according to the comparative example B comprised in addition 0.5 parts by weight of a mixture of organic phosphite compounds consisting substantially of trisnonylphenylphosphite and de-

cyldiphenyl phosphite, 0.15 parts by weight of zinc oxide and 0.15 parts by weight of zinc sulphide. In the polymer mixture according to example I 0.15 parts of weight of monosodium dihydrogen phosphate were taken up instead of the organic phosphite compound, while also 0.15 parts by weight of zinc oxide and 0.15 parts by weight of zinc sulphide were taken up.

The said constituents were extruded in a Werner Pfleiderer double-blade extruder at an average temperature of 285°C and 300 rpm. The extrudate was chopped up in pellets. The pellets were manufactured to form test pieces by injection moulding to determine the Izod impact strength with notch. The test rods were aged artificially in a furnace at 110 ± 2°C. The Izod notch impact value (according to ASTM D 256) of five rods was determined at regular intervals. The duration in hours until a decrease of the notch impact value of 50% had occurred was determined.

The oxidation rate was determined by measuring the oxygen take up at 124 ± 0.2°C in an atmosphere of pure oxygen (pressure 1 atmosphere). For that purpose, always 1.00 g of granulate was provided in a glass tube connected to a gas burette. After thorough rinsing with pure oxygen and after reaching temperature equilibrium, the level of the burette was read regularly. The time until 5 ml and 10 ml, respectively, of oxygen had been taken up was determined.

The results of the above test are summarized in the following table.

| Example | A | B | I |
|---|---|---|---|
| Stabiliser | none | organic phosphite (0.5 parts by weight) (+ ZnO + ZnS) | $NaH_2PO_4$ (0.15 parts by weight) (+ ZnO + ZnS) |
| HDT (C°) ASTM D 648 | 135 | 133 | 135 |
| Melt viscosity (Pa.s) at 232°C and 1500 $S^{-1}$ | 245 | 240 | 250 |
| Notched Izod impact (J/m) ASTM D 256 | 210 | 210 | 205 |
| Time (h) to take up of 5 ml of $O_2$ per gram of granulate at 124°C | 20 | 70 | 75 |
| Time (h) to take up of 10 ml of $O_2$ per gram of granulate at 124°C | 50 | 140 | 145 |
| Time (h) to decrease notched Izod impact by 50% upon ageing in furnace (110°C) | 630 | 1300 | 1300 |

It may be seen from the above results that the polymer mixture according to the invention has a better HDT Value, a more favourable melt viscosity value, and a slightly better value for the oxygen take up at 124°C. These better values are obtained at a concentration of $NaH_2PO_4$ which is smaller than the concentration of organic phosphite.

**Claims**

1. A polymer mixture which comprises a polyphenylene ether, optionally a vinylaromatic polymer, and a stabilizer, characterized in that the polymer mixture comprises as a stabiliser an inorganic hydrogen phosphate or phosphoric acid in a quantity from 0,01 to 3.0 parts by weight per 100 parts by weight of polyphenylene ether.

2. A polymer mixture as claimed in Claim 1, characterized in that the polymer mixture moreover comprises a mixture of zinc oxide and zinc sulphide in a quantity from 0.01 to 3.0 parts by weight per 100 parts by weight of polyphenylene ether.

3. A polymer mixture as claimed in Claim 1 or 2, characterized in that the polymer mixture comprises as an inorganic phosphate a mono- or dihydrogen phosphate of an alkali metal or an alkaline earth metal.

4. A polymer mixture as claimed in Claims 1-3, characterized in that the polymer mixture comprises one or more of the following additives: an agent to improve the impact strength, an agent to improve the flame resistance, UV-stabilisers, reinforcing or non-reinforcing filling materials, dyes or pigments, agents to improve the sensitivity to crack formation under stress upon contact with solvents, blowing agents, lubricants, mould release agents.

5. Articles formed by polymer mixture as claimed in one or more of the claims 1-4.

**Patentansprüche**

1. Polymermischung, die enthält: einen Polyphenylenäther, fakultativ ein vinyl-aromatisches Polymer und einen Stabilisator, dadurch gekennzeichnet, daß die Polymermischung als Stabilisator ein anorganisches Hydrogenphosphat oder Phosphorsäure in einer Menge von 0,01 bis 3,0 Gew.-Teilen pro 100 Gew.-Teile des Polyphenylenäthers enthält.

2. Polymermischung nach Anspruch 1, dadurch gekennzeichnet, daß die Polymermischung darüber hinaus eine Mischung aus Zinkoxid und Zinksulfid in einer Menge von 0,01 bis 3,0 Gew.-Teilen pro 100 Gew.-Teile des Polyphenylenäthers enthält.

3. Polymermischung nach Anspruch 1 oder 2, dadurch gekennzeichnet, daß die Polymermischung als ein anorganisches Phosphat ein Mono- oder Dihydrogenphosphat eines Alkalimetalls oder eines Erdalkalimetalls enthält.

4. Polymermischung nach den Ansprüchen 1 bis 3, dadurch gekennzeichnet, daß die Polymermischung eine oder mehrere der folgenden Zusatzstoffe aufweist:
ein Mittel zur Verbesserung der Schlagfestigkeit, ein Mittel zur Verbesserung der Flammbeständigkeit, UV-Stabilisatoren, verstärkende oder nicht-verstärkende Füllstoffe, Farbstoffe oder Pigmente, Mittel zur Verbesserung der Empfindlichkeit gegenüber Crack-Bildung unter Stressbedingungen beim Kontakt mit Lösungsmitteln, Schäummitteln, Schmiermitteln und Formentrennmitteln.

5. Gegenstände, die aus der Polymermischung nach einem oder mehreren der Ansprüche 1 bis 4 ausgeformt sind.

**Revendications**

1. Mélange de polymères qui comprend un poly(oxyphénylène), éventuellement un polymère vinylique aromatique et un stabilisant, caractérisé en ce que le mélange de polymères comprend, comme stabilisant, un hydrogénophosphate inorganique ou de l'acide phosphorique en une quantité de 0,01 à 3,0 parties en poids pour 100 parties en poids de poly(oxyphénylène).

2. Mélange de polymères selon la revendication 1, caractérisé en ce que le mélange de polymères comprend, en plus, un mélange d'oxyde de zinc et de sulfure de zinc en une quantité de 0,01 à 3,0 parties en poids pour 100 parties en poids de poly(oxyphénylène).

3. Mélange de polymères selon la revendication 1 ou 2, caractérisé en ce que le mélange de polymères comprend comme phosphate inorganique, un mono- ou un dihydrogénophosphate d'un métal alcalin ou d'un métal alcalino-terreux.

4. Mélange de polymères selon les revendications 1 à 3, caractérisé en ce que le mélange de polymères comprend un ou plusieurs des additifs suivants: un agent pour améliorer la résistance au choc, un agent pour améliorer la résistance au feu, des stabilisants envers les UV, des matériaux de charge renforçateurs ou non renforçateurs, des colorants ou des pigments, des agents pour améliorer la sensibilité à la formation de fissures sous contrainte lors du contact avec des solvants, des agents de gonflage, des lubrifiants, des agents de démoulage.

5. Objet formé à partir du mélange de polymères selon une ou plusieurs des revendications 1 à 4.